# EUROPEAN PATENT APPLICATION

(11) **EP 4 657 610 A1**
(43) Date of publication of application: **03.12.2025**
(21) Application number: 23918109.2
(22) Date of filing: 28.01.2023
(51) Int. Cl.: H01M 10/655, H01M 10/6557, H01M 10/613

(54) **THERMAL MANAGEMENT PART, THERMAL MANAGEMENT ASSEMBLY, BATTERY AND ELECTRIC DEVICE**

(71) Applicant: Contemporary Amperex Technology (Hong Kong) Limited, Hong Kong (HK)
(72) Inventor: GUO, Haijian, Ningde, Fujian 352100 (CN); HUANG, Xiaoteng, Ningde, Fujian 352100 (CN); HOU, Yuepan, Ningde, Fujian 352100 (CN); SONG, Feiting, Ningde, Fujian 352100 (CN); LI, Xingxing, Ningde, Fujian 352100 (CN); ZHOU, Cong, Ningde, Fujian 352100 (CN)
(74) Representative: Ran, Handong
(86) International application number: PCT/CN2023/073607
(87) International publication number: WO 2024/156102

(57) **Abstract**

The present application belongs to the technical field of batteries. Provided are a thermal management part, a thermal management assembly, a battery and an electric device. The thermal management part comprises two straight walls and two bent walls, wherein the two straight walls are oppositely arranged in a first direction; the two bent walls are respectively connected to two ends of each straight wall in a second direction, the second direction being perpendicular to the first direction; and the two bent walls and two straight walls enclose an accommodating space, and the accommodating space is used for accommodating a heat exchange medium. By means of the thermal management part of such a structure, the bent walls are convenient to deform when the thermal management part is compressed in the first direction during manufacturing, such that the manufacturing tolerance of the thermal management part can be absorbed through compression so as to control the dimensions of the thermal management part in the first direction, thereby effectively improving the manufacturing accuracy of the thermal management part, ensuring the assembly accuracy between the thermal management part and a battery cell, and facilitating temperature regulation performed by the thermal management part on the battery cell.

## Description

### TECHNICAL FIELD

The present disclosure relates to the technical field of batteries, and particularly to a thermal management component, a thermal management assembly, a battery, and an electric device.

### BACKGROUND ART

In recent years, new energy vehicles have experienced a leapfrog development. In the field of electric vehicles, power batteries serve as the energy source for electric vehicles and play an irreplaceable important role. The battery consists of a box and multiple battery cells accommodated within the box. The battery, as the core component of new energy vehicles, has high requirements in terms of both safety and service life. The battery cells within the battery generate a large amount of heat during continuous charging and discharging processes. Thus, a thermal management component, configured for adjusting the temperature of the battery cells, is arranged in the box. However, the existing thermal management components have manufacturing tolerances and relatively poor production quality, leading to poor assembly precision between the thermal management component and the battery cells, which is unfavorable for adjusting the temperature of the battery cells.

### SUMMARY

The embodiments of the present disclosure provide a thermal management component, a thermal management assembly, a battery, and an electric device, which is capable of effectively improving the manufacturing precision of the thermal management component.

In a first aspect, the embodiments of the present disclosure provide a thermal management component, including two straight walls and two bent walls. The two straight walls are arranged oppositely along a first direction. Each of the two bent walls is connected to one end of the straight walls along a second direction, where the second direction is perpendicular to the first direction. The two bent walls and the two straight walls enclose to form a holding space, and the holding space is configured to contain a heat exchange medium.

In the above technical solution, the thermal management component is provided with two straight walls arranged oppositely along the first direction, and the same ends of the two straight walls are connected by a bent wall, so as to form a holding space configured for containing the heat exchange medium. This enables the thermal management component to perform temperature management. The thermal management component with this structure facilitates the deformation of the bent wall when compressing the thermal management component along the first direction during manufacturing, thereby allowing absorption of the manufacturing tolerances of the thermal management component through compression. Therefore, the size of the thermal management component in the first direction is controlled, effectively improving the manufacturing precision of the thermal management component and ensuring the assembly precision between the thermal management component and the battery cells, thus favoring the temperature adjustment of the battery cells by the thermal management component.

In some embodiments, along the second direction, the bent wall bends in a direction away from the holding space.

In the above technical solution, by arranging the bent wall to bend in a direction away from the holding space along the second direction, meaning that the bent wall protrudes outward at both ends of the thermal management component, this structure, on the one hand, facilitates manufacturing, helps reduce the difficulty of manufacturing the thermal management component, and on the other hand, effectively alleviates the phenomenon of rupture at the connection between the bent wall and the straight wall when compressing the thermal management component to absorb manufacturing tolerances.

In some embodiments, the bent wall includes a first segment and two second segments. A second segment, a first segment, and the other second segment are sequentially connected, and the two second segments are respectively connected to the two straight walls. The second segment is arranged obliquely relative to the straight wall connected to it, and along the first direction, the first segment is positioned between the two straight walls.

In the above technical solution, the bent wall is provided with second segments that are respectively connected to the two straight walls and a first segment connected between the two second segments. The second segments bend in the first direction toward the other second segment, such that the distance between the two second segments gradually decreases in the second direction toward the first segment, thus allowing the bent wall to form a contracted structure. Thus, when compressing the thermal management component to absorb manufacturing tolerances, the second segments can deform relative to the first segment, to facilitate the compression of the thermal management component to absorb manufacturing tolerances.

In some embodiments, a wall thickness of the straight wall is L₁, and a wall thickness of the first segment is L₂, satisfying a condition: L₂ > L₁.

In the above technical solution, by setting the wall thickness of the first segment of the bent wall to be greater than the wall thickness of the straight wall, the structural strength and the deformation resistance of the first segment of the bent wall are increased. This effectively alleviates the occurrence of deformation or excessive curvature change of the first segment of the bent wall when compressing the thermal management component to absorb manufacturing tolerances, which is conducive to maintaining the original structural shape of the first segment of the bent wall. Consequently, it can reduce the occurrence of excessive compression or crushing of the thermal management component, thereby lowering the risk of the bent wall being damaged or cracked during the compression process of the thermal management component.

In some embodiments, along the second direction, the first segment is an arc-shaped structure bending in a direction away from the holding space.

In the above technical solution, by arranging the first segment as an outwardly bending arc-shaped structure, one the one hand, it facilitates the connection between the first segment and the second segment, thus reducing the difficulty of manufacturing; on the other hand, it enables a smooth arc transition between the first segment and the second segment, which alleviates the phenomenon of excessively small curvature radius at the connection between the first segment and the second segment. This effectively reduces the risk of the connection between the first segment and the second segment being damaged or cracked during the compression process of the thermal management component.

In some embodiments, the wall thickness of the second segment gradually increases from the end connected to the straight wall toward the end connected to the first segment.

In the above technical solution, by setting the wall thickness of the second segment to gradually increase from the end connected to the straight wall to the end connected to the first segment, it facilitates manufacturing the first segment as a structure in which a wall thickness is greater than the wall thickness of the straight wall, thus reducing manufacturing difficulty.

In some embodiments, the thermal management component further includes a reinforcement portion, and the reinforcement portion is arranged between the two second segments along the first direction.

In the above technical solution, by arranging a reinforcement portion between the two second segments along the first direction, the reinforcement portion can provide certain support for the two second segments, thereby increasing the deformation resistance of the first segment of the bent wall. This effectively alleviates the occurrence of deformation or excessive curvature change of the first segment of the bent wall when compressing the thermal management component to absorb manufacturing tolerances, which is conducive to maintaining the original structural shape of the first segment of the bent wall. Consequently, it can reduce the occurrence of excessive compression or crushing of the thermal management component, thereby lowering the risk of the bent wall being damaged or cracked during the compression process of the thermal management component.

In some embodiments, along the first direction, one end of the reinforcement portion is connected to one of the two second segments, and the other end is arranged at intervals with the other of the two second segments.

In the above technical solution, by arranging the reinforcement portion to be connected to one second segment and spaced from the other second segment, the reinforcement portion can provide support to the two second segments and reserve compression allowance at the same time, thereby facilitating the compression of the thermal management component to absorb manufacturing tolerances.

In some embodiments, along the first direction, each end of the reinforcement portion is connected to one of the two second segments.

In the above technical solution, by connecting each end of the reinforcement portion with each of the two second segments, this structure effectively enhances the connection strength between the reinforcement portion and the bent wall, which is beneficial for improving the supporting effect of the reinforcement portion on the two second segments.

In some embodiments, along the second direction, the reinforcement portion is arranged at intervals with the first segment.

In the above technical solution, by arranging the reinforcement portion at intervals with the first segment along the second direction, a gap is provided between the reinforcement portion and the first segment in the second direction, which helps to reduce the manufacturing difficulty of the thermal management component.

In some embodiments, the thermal management component further includes multiple partition portions. The multiple partition portions are arranged at intervals along the second direction. The partition portion is arranged obliquely between the two straight walls and connected to the two straight walls. The multiple partition portions are configured to divide the holding space into multiple medium flow channels, and the medium flow channels are configured to contain a heat exchange medium.

In the above technical solution, by arranging multiple partition portions at intervals along the second direction within the holding space of the thermal management component, the holding space is divided into multiple medium flow channels configured for the flow of heat exchange medium. This facilitates the control of the flow rate and flow volume of the heat exchange medium within the thermal management component. Additionally, by arranging the partition portion in an inclined manner and connecting it between the two straight walls, the partition portion can deform more easily when the thermal management component is compressed along the first direction to absorb manufacturing tolerances, which helps to reduce the difficulty of compressing the thermal management component.

In some embodiments, the partition portion is provided with an opposing first surface and second surface along its thickness direction. The two straight walls include a first straight wall and a second straight wall, wherein the first straight wall is provided with a third surface facing the medium flow channel, and the second straight wall is provided with a fourth surface facing the medium flow channel; the first surface is arranged at an acute angle with the third surface and at an obtuse angle with the fourth surface, and the second surface is arranged at an obtuse angle with the third surface and at an acute angle with the fourth surface, wherein the first surface is connected to the third surface through a first chamfered surface, and/or the second surface is connected to the fourth surface through a second chamfered surface.

In the above technical solution, the two surfaces of the partition portion that form acute angles with the straight wall are connected through chamfered surfaces, which increases the thickness of the portion where the partition portion connects with the straight wall along the second direction. On the one hand, it enhances the stability and reliability of the connection between the partition portion and the straight wall, and on the other hand, it also helps to alleviate the occurrence of cracks between the partition portion and the straight wall.

In some embodiments, along the first direction, a support portion is provided in a protruding manner on a side of the straight wall facing the holding space, and a size of the support portion is smaller than a distance between the two straight walls.

In the above technical solution, by providing a support portion on the side of the straight wall facing the holding space, and with the size of the support portion along the first direction being smaller than the distance between the two straight walls, the support portion is arranged on one straight wall and is arranged at intervals with the other straight wall in the first direction. The thermal management component with this structure allows the support portion to provide some support to the two straight walls when the thermal management component is compressed to absorb manufacturing tolerances, thereby alleviating the phenomenon of excessive compression or crushing of the thermal management component. This is beneficial for maintaining the smooth flow of the heat exchange medium within the holding space.

In some embodiments, both straight walls are provided with support portions, and along the first direction, the projections of the support portions on the two straight walls do not overlap.

In the above technical solution, by providing support portions on both straight walls, where the projections of the support portions on the two straight walls along the first direction do not overlap, the supporting effect of the support portions on the two straight walls is enhanced. This further reduces the risk of excessive compression or crushing of the thermal management component.

In a second aspect, the embodiments of the present disclosure further provide a thermal management assembly, including a first current collector, a second current collector, and the above-mentioned thermal management component. Along a third direction, the first current collector and the second current collector are respectively connected to both ends of the thermal management component. The first direction, the second direction, and the third direction are perpendicular to each other in pairs. The first current collector and the second current collector are respectively provided with a medium inlet and a medium outlet, wherein the medium inlet and the medium outlet are in communication with the holding space.

In the above technical solution, the thermal management assembly is further provided with a first current collector and a second current collector, which are connected to both ends of the thermal management component along the third direction. The first current collector and the second current collector are respectively provided with a medium inlet and a medium outlet. Therefore, by communicating the two ends of the holding space respectively with the medium inlet and medium outlet, the heat exchange medium can flow into or out of the holding space, thereby enabling the thermal management function of the thermal management assembly.

In a third aspect, the embodiments of the present disclosure further provide a battery, including a box, a battery cell, and the above-mentioned thermal management assembly. The thermal management assembly is arranged within the box, and the thermal management assembly is configured to regulate the temperature of the battery cell.

In some embodiments, the battery cell is provided with a first side surface, wherein the first side surface is a surface with the largest area among the outer surfaces of the battery cell, and the first side surface abuts the straight wall.

In the above technical solution, by arranging the straight wall of the thermal management component to abut the first side surface of the battery cell, that is, by arranging the thermal management component on the side of the battery cell with the largest surface area, sufficient heat exchange area between the battery cell and the thermal management component can be ensured. This is beneficial for enhancing the thermal management capability of the thermal management component for the battery cell, thereby effectively reducing the safety risks caused by temperature rise during the use of the battery.

In the fourth aspect, the embodiments of the present disclosure further provide an electric device comprising the battery as described above, wherein the battery is configured to provide electrical energy.

### BRIEF DESCRIPTION OF DRAWINGS

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of the structure of a battery provided in some embodiments of the present disclosure;
FIG. 3 is a schematic diagram of an assembly of a thermal management assembly and a battery cell provided in some embodiments of the present disclosure;
FIG. 4 is a schematic diagram of a structure of a thermal management assembly provided in some embodiments of the present disclosure;
FIG. 5 is a schematic diagram of a structure of a thermal management component provided in some embodiments of the present disclosure;
FIG. 6 is a partially enlarged view at A of a thermal management component shown in FIG. 5;
FIG. 7 is a front view of a thermal management component in a third direction provided in some embodiments of the present disclosure;
FIG. 8 is a partially enlarged view at B of a thermal management component shown in FIG. 7;
FIG. 9 is a front view of a thermal management component in a third direction provided in some other embodiments of the present disclosure;
FIG. 10 is a partially enlarged view at C of a thermal management component shown in FIG. 9;
FIG. 11 is a front view of a thermal management component in a third direction provided in some other embodiments of the present disclosure;
FIG. 12 is a partially enlarged view at D of a thermal management component shown in FIG. 11;
FIG. 13 is a partially enlarged view at E of a thermal management component shown in FIG. 7; and
FIG. 14 is a front view of a thermal management component in a third direction provided in yet some other embodiments of the present disclosure.

Reference numerals: 1000- vehicle; 100- battery; 10- box; 11- first box body; 12- second box body; 20- battery cell; 21- first side surface; 30- thermal management assembly; 31- thermal management component; 311- straight wall; 3111- first straight wall; 3111a- third surface; 3112- second straight wall; 3112a- fourth surface; 312- bent wall; 3121- first segment; 3122- second segment; 313- holding space; 3131- medium flow channel; 314- reinforcement portion; 315- partition portion; 3151- first surface; 3152-second surface; 316- first chamfered surface; 317- second chamfered surface; 318- support portion; 32-first current collector; 321- medium inlet; 33- second current collector; 331- medium outlet; 200- controller; 300- motor; X- first direction; Y- second direction; Z- third direction.

### DETAILED DESCRIPTION OF EMBODIMENTS

In order to make the objective, technical solution, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms, "comprise", "provide" and their variations, and any other variations, are intended to cover non-exclusive inclusion in the summary, the claims, and the above drawings of the present disclosure. The terms "first", "second", and so on in the summary and claims of the present disclosure or in the above drawings are used to distinguish between different objects and are not intended to describe a specific sequence or hierarchy.

The term "embodiment" used in the present disclosure means that specific features, structures, or characteristics described in conjunction with the embodiments can be included in at least one embodiment of the present disclosure. The use of the phrase in various parts of the summary does not necessarily refer to the same embodiment, nor does it imply that these embodiments are mutually exclusive or independent of each other.

In the description of the present disclosure, it should be noted that, unless otherwise clearly stipulated and limited, the terms "provide", "interconnect", "connect", and "attach" should be understood in a broad sense. For example, it can be a fixed connection, a detachable connection, or an integral connection; and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A, the presence of both A and B, or the presence of B. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, and the overall dimensions such as thickness, length, and width of the integrated device, are provided as illustrative examples and should not be construed to limit the scope of the present disclosure.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-lithium ion batteries, sodium-ion batteries, and magnesium-ion batteries. The embodiments of the present disclosure are not limited to any specific type of battery. The battery cell can have various shapes such as cylindrical, flat, rectangular, or other shapes. The embodiments of the present disclosure are not limited in respect thereof either. Battery cells are generally categorized into three types according to the encapsulation method: cylindrical battery cells, prismatic battery cells, and soft pouch battery cells. The embodiments of the present disclosure are not limited herein either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. A battery generally includes a box for encapsulating one or multiple battery cells or multiple battery modules. The box helps to prevent liquids or other foreign substances from affecting the charging or discharging of the battery cells.

The battery cell comprises a housing, an electrode assembly, and an electrolyte, and the housing is configured to accommodate the electrode assembly and the electrolyte. The electrode assembly is composed of a positive electrode sheet, a negative electrode sheet, and a separator. The battery cells work primarily on the movement of metal ions between the positive electrode sheet and the negative electrode sheet.

In recent years, new energy vehicles have experienced a leapfrog development. In the field of electric vehicles, power batteries serve as the energy source for electric vehicles and play an irreplaceable important role. The battery consists of a box and multiple battery cells accommodated within the box. The battery, as the core component of new energy vehicles, has high requirements in terms of both safety and cycle service life.

The inventors have found that, in conventional power batteries, to ensure that the battery obtains sufficient power, multiple battery cells within the box of the battery are typically arranged in a stacked manner. However, during the continuous charging and discharging process, the battery cells inside the battery generate a large amount of heat, leading to a rapid increase in the internal temperature of the battery. The stacked arrangement of multiple battery cells exacerbates this phenomenon. This significantly affects the performance and lifespan of the battery, and may even pose significant safety hazards during use, which is not conducive to consumer safety. Therefore, a thermal management component is usually arranged inside the battery, the thermal management component is arranged on one side of the battery cell, and a channel for the flow of heat exchange medium is formed inside the thermal management component, thereby enabling the cooling or heating of the battery cell. However, the thermal management component with the structure has a large manufacturing tolerance, which is not conducive to ensuring the assembly precision between the thermal management component and the battery cell.

Based on the above considerations, in order to solve the problem of the low manufacturing precision of existing thermal management components, the inventors, after in-depth research, designed a thermal management component, wherein the thermal management component includes two straight walls and two bent walls, the two straight walls are arranged oppositely along a first direction. Each of the two bent walls is connected to one end of the straight walls, along a second direction perpendicular to the first direction. The two bent walls and the two straight walls enclose to form a holding space, and the holding space is configured to contain a heat exchange medium.

In the thermal management component with this structure, the thermal management component is provided with two straight walls arranged oppositely along the first direction, and the same ends of the two straight walls are connected by a bent wall, so as to form a holding space configured for containing the heat exchange medium. This enables the thermal management component to perform temperature management. The thermal management component with this structure facilitates the deformation of the bent wall when compressing the thermal management component along the first direction during manufacturing, thereby allowing absorption of the manufacturing tolerances of the thermal management component through compression. Therefore, the size of the thermal management component in the first direction is controlled, effectively improving the manufacturing precision of the thermal management component and ensuring the assembly precision between the thermal management component and the battery cells, thus favoring the temperature adjustment of the battery cells by the thermal management component.

The thermal management component disclosed in the embodiments of the present disclosure can be used in various electric devices, including but not limited to vehicles, ships, or aircraft. The power system of the electric device can be composed using the thermal management system, battery, and other components disclosed in the present disclosure. This is beneficial for reducing the manufacturing tolerance of the thermal management component, thereby improving the assembly precision between the thermal management component and the battery cell.

The embodiments of the present disclosure provide an electric device that uses batteries as a power source. The electric device can comprise, but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electric device is a vehicle 1000 as an example.

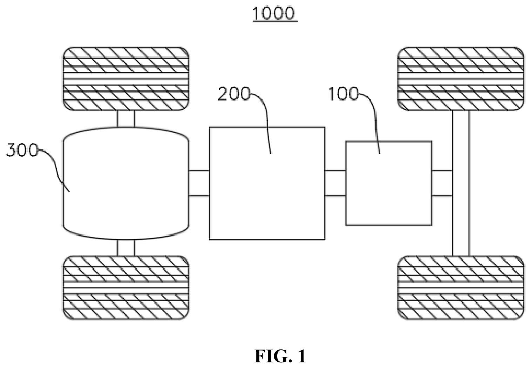

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, and so on. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can be the operational power source for the vehicle 1000. Additionally, the vehicle 1000 also comprises a controller 200 and a motor 300. The controller 200 is configured to manage the supply of power from the battery 100 to the motor 300, for example, for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially replace gasoline or natural gas to provide driving propulsion for the vehicle 1000.

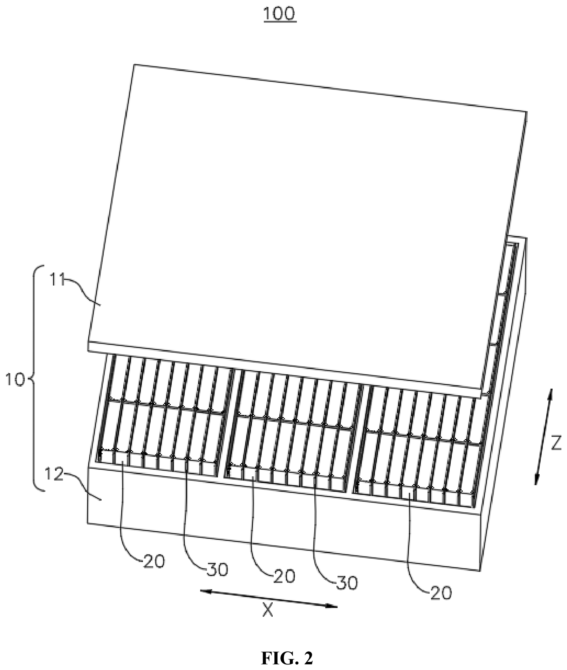

Referring to FIG. 2, FIG. 2 is an exploded view of the structure of a battery 100 provided in some embodiments of the present disclosure. The battery 100 comprises a box 10 and multiple battery cells 20, wherein the battery cells 20 are configured to be housed in the box 10.

The box 10 is configured to provide an assembly space for the battery cell 20, and the box 10 can be of various structures. In some embodiments, the box 10 can include a first box body 11 and a second box body 12, wherein the first box bod 11 and the second box body 12 are caped together. The first box body 11 and the second box body 12 collectively define an assembly space configured for accommodating the battery cell 20. The second box body 12 can be a hollow structure open at one end, and the first box body 11 can be a plate-like structure. The first box body 11 is capped over an open side of the second box body 12 so that the first box body 11 and the second box body 12 together define an assembly space. Or, both the first box body 11 and the second box body 12 can be hollow structures open at one end, and an open side of the first box body 11 is capped over an open side of the second box body 12. Of course, the box 10 formed by the first box body 11 and the second box body 12 can be of a variety of shapes, such as cylindrical or rectangular.

In the battery module 100, the multiple battery cells 20 can be connected in series, parallel, or hybrid. A hybrid connection refers to having both series and parallel connections among multiple battery cells 20. The multiple battery cells 20 can be directly connected in series, in parallel, or in a hybrid connection. Then, the whole comprising the multiple battery cells 20 is housed in the box 10. Of course, the battery 100 can also be in the form that, the multiple battery cells 20 are first connected in series, in parallel, or in hybrid connection to form battery modules, and then the multiple battery modules are connected in series, in parallel, or in hybrid connection to be formed into a whole, which is then accommodated within the box 10. The battery 100 can also comprise other structures. For example, the battery 100 can also comprise a busbar component, which is configured for achieving electrical connections between the multiple battery cells 20.

Optionally, the battery 100 can also include a thermal management system, and the thermal management system is arranged within the box 10. The thermal management system can include multiple thermal management assemblies 30, and the thermal management assemblies 30 are configured to manage the temperature of the battery cell 20, thereby cooling down or heating up the battery cell 20.

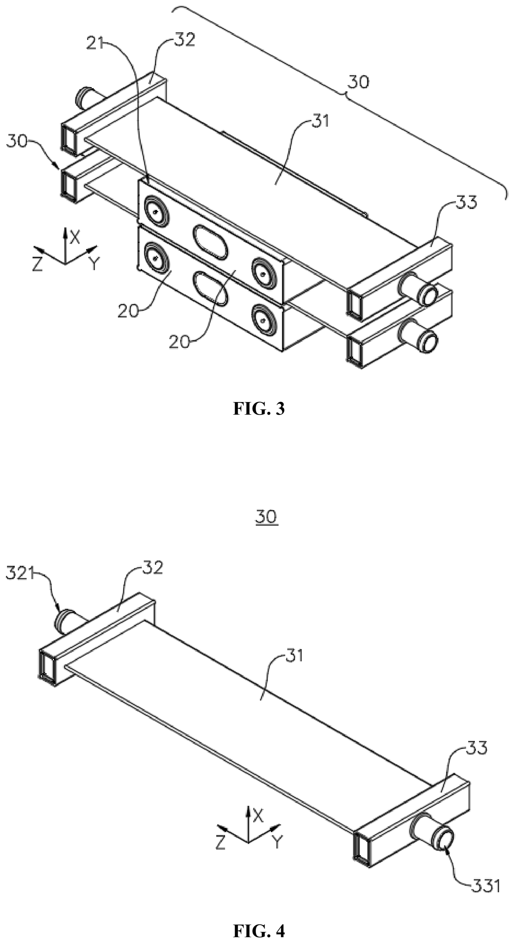

With reference to FIG. 2, and with further reference to FIG. 3, FIG. 3 is a schematic diagram of an assembly of a thermal management assembly 30 and a battery cell 20 provided in some embodiments of the present disclosure. The battery 100 includes multiple rows of battery cells 20, with the multiple rows of battery cells 20 arranged along the first direction X. Each row of battery cells 20 includes multiple battery cells 20 arranged along the third direction Z. It should be noted that in other embodiments, the battery 100 can also include only multiple battery cells 20 arranged along the first direction X, meaning that the battery 100 includes only a single row of multiple battery cells 20 arranged along the first direction X.

Each battery cell 20 can be a secondary battery or a primary battery; and it can also be a lithium-sulfur battery, sodium-ion battery, magnesium-ion battery, or other types, but is not limited herein. The battery cell 20 can have various shapes such as cylindrical, flat, rectangular, or other shapes. For example, in FIG. 3, the shape of the battery cell 20 is a rectangular prism. Accordingly, the first direction X is the thickness direction of the battery cell 20, and the third direction Z is the length direction of the battery cell.

In some embodiments, the thermal management system includes multiple thermal management assemblies 30. Along the first direction X, a thermal management assembly 30 is arranged between two adjacent rows of battery cells 20. The thermal management assembly 30 is configured to perform heat exchange with the battery cell 20 to manage the temperature of the battery cell 20.

With reference to FIG. 3, and with further reference to FIG. 4, FIG. 4 is a schematic diagram of a structure of a thermal management assembly 30 provided in some embodiments of the present disclosure. The thermal management assembly 30 includes a thermal management component 31, a first current collector 32, and a second current collector 33. Along the third direction Z, the first current collector 32 and the second current collector 33 are respectively connected to both ends of the thermal management component 31.

The first direction X is the thickness direction of the thermal management component 31, the second direction Y is the width direction of the thermal management component 31, and the third direction Z is the length direction of the thermal management component 31, which is also the extending direction of the thermal management component 31.

The first current collector 32 is provided with a medium inlet 321, and the medium inlet 321 is configured for the inflow of the heat exchange medium. The second current collector 33 is provided with a medium outlet 331, and the medium outlet 331 is configured for the outflow of the heat exchange medium. Both the medium inlet 321 and the medium outlet 331 are in communication with the interior of the thermal management component 31 to facilitate the flow of the heat exchange medium within the thermal management component 31, thereby enabling heat exchange with the battery cell 20 to manage the temperature of the battery cell 20.

Optionally, the multiple thermal management assemblies 30 in the thermal management system can be structured in series with each other or in parallel with each other. If the medium inlets 321 of the first current collectors 32 of multiple thermal management assemblies 30 are communicated with each other, and the medium outlets 331 of the second current collectors 33 of the multiple thermal management assemblies 30 are communicated with each other, then the multiple thermal management assemblies 30 are structured in parallel with each other. If the medium inlet 321 of the first current collector 32 of a thermal management assembly 30 of the multiple thermal management assemblies 30 is sequentially communicated with the medium outlet 331 of the second current collector 33 of another thermal management assembly 30, then the multiple thermal management assemblies 30 are structured in series with each other.

It should be noted that in the structure where multiple thermal management assemblies 30 are interconnected in series or parallel, one thermal management assembly 30 can be directly connected to another thermal management assembly 30; or, they can be connected through other components, such as connecting pipes, to enable a series structure or a parallel structure of multiple thermal management assemblies 30.

Exemplarily, the heat exchange medium can be a gas, such as air or hydrogen; or, the heat exchange medium can be a liquid, such as water, saline solution, or liquid nitrogen. Of course, in other embodiments, the heat exchange medium can also be a solid, such as paraffin, which can achieve the heat exchange function through a phase change of the heat exchange medium. For example, when paraffin transitions from a solid state to a liquid state, it can absorb heat, thereby achieving a cooling effect on the battery cell 20.

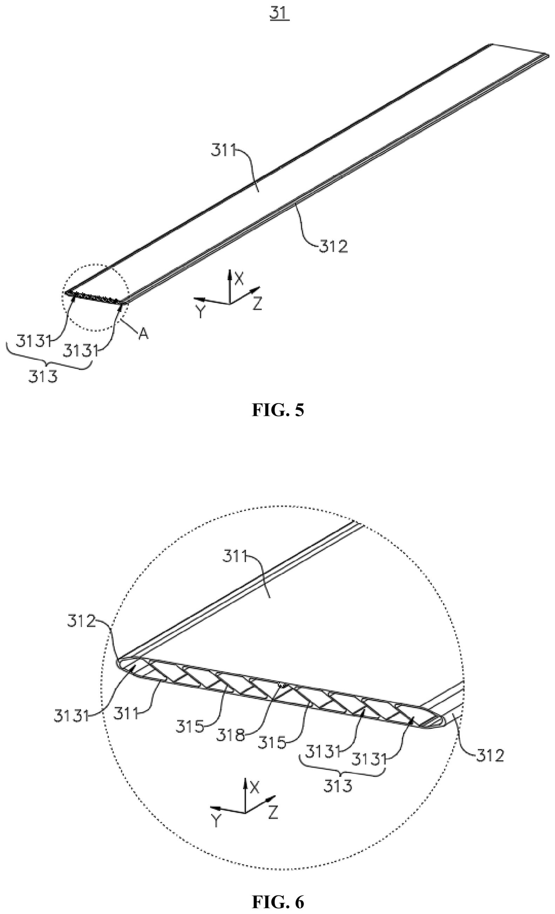

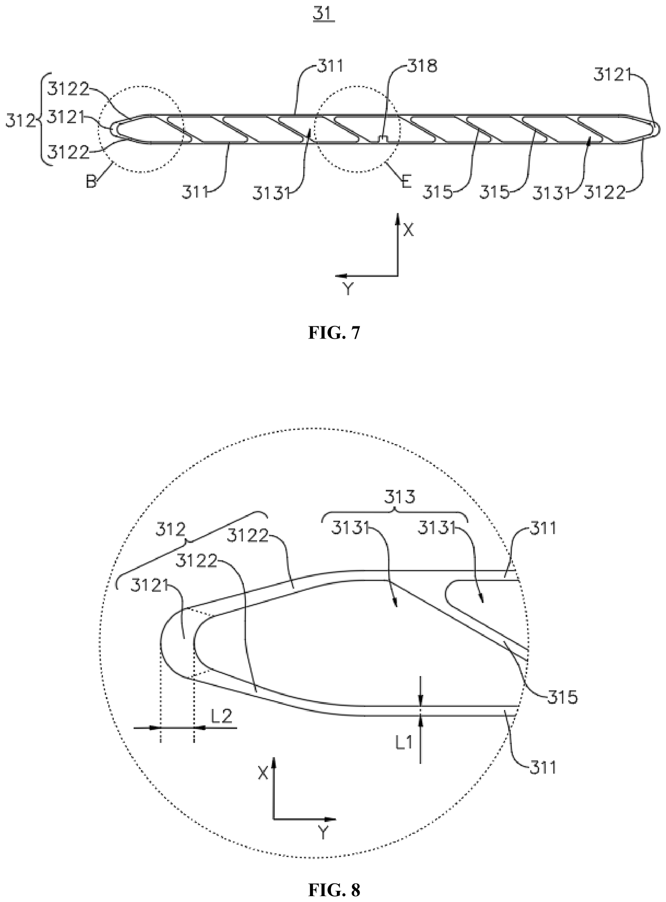

According to some embodiments of the present disclosure, with reference to FIGS. 3 and 4, and with further reference to FIGS. 5, 6, and 7, FIG. 5 is a schematic diagram of a structure of a thermal management component 31 provided in some embodiments of the present disclosure; FIG. 6 is a partially enlarged view at A of a thermal management component 31 shown in FIG. 5; and FIG. 7 is a front view of a thermal management component 31 in a third direction Z provided in some embodiments of the present disclosure. The present disclosure provides a thermal management component 31, wherein the thermal management component 31 includes two straight walls 311 and two bent walls 312. The two straight walls 311 are arranged oppositely along a first direction X. Each of the two bent walls 312 is connected to one end of the straight walls 311 along a second direction Y, where the second direction Y is perpendicular to the first direction X. The two bent walls 312 and the two straight walls 311 enclose to form a holding space 313, and the holding space 313 is configured for containing a heat exchange medium.

The two straight walls 311 are arranged opposite each other along the first direction X, meaning that the two straight walls 311 are arranged at intervals along the first direction X and oriented towards each other. The first direction X is the thickness direction of the straight walls 311, meaning that the two straight walls 311 are arranged at intervals and parallel to each other.

Each of the two bent walls 312 is connected to one end of the straight walls 311 along a second direction Y, and the two bent walls 312 and the two straight walls 311 enclose to form a holding space 313, which means that two straight walls 311 are connected at the same end by a bent wall 312. In other words, one straight wall 311, one bent wall 312, the other straight wall 311, and the other bent wall 312 are sequentially connected in a manner of head to tail to form a holding space 313 configured for containing a heat exchange medium. This allows the heat exchange medium to flow within the holding space 313, thereby regulating the temperature of the battery cell 20.

The bent wall 312 is a structure connected between two straight walls 311 and curved, and the bending direction of the bent wall 312 can vary. For instance, the bent wall 312 can curve in the second direction Y away from the other bent wall 312, or it can curve in the second direction Y towards the other bent wall 312.

The thermal management component 31 is provided with two straight walls 311 arranged oppositely along the first direction X, and the same ends of the two straight walls 311 are connected by a bent wall 312, so as to form a holding space 313 configured for containing the heat exchange medium. This enables the thermal management component 31 to perform temperature management. The thermal management component 31 with this structure facilitates the deformation of the bent wall 312 when compressing the thermal management component 31 along the first direction X during manufacturing, thereby allowing absorption of the manufacturing tolerances of the thermal management component 31 through compression. Therefore, the size of the thermal management component 31 in the first direction X is controlled, effectively improving the manufacturing precision of the thermal management component 31 and ensuring the assembly precision between the thermal management component 31 and the battery cells 20, thus favoring the temperature adjustment of the battery cells 20 by the thermal management component 31.

In some embodiments, referring to FIGS. 6 and 7, along the second direction Y, the bent walls 312 bend in a direction away from the holding space 313.

In other words, one bent wall 312 curves in the second direction Y away from the other bent wall 312, causing the bent wall 312 to protrude outward at both ends of the thermal management component 31.

By arranging the bent walls 312 to bend in a direction away from the holding space 313 along the second direction Y, this structure, on the one hand, facilitates manufacturing, helps reduce the difficulty of manufacturing the thermal management component 31, and on the other hand, effectively alleviates the phenomenon of rupture at the connection between the bent wall 312 and the straight wall 311 when compressing the thermal management component 31 to absorb manufacturing tolerances.

According to some embodiments of the present disclosure, with reference to FIGS. 6 and 7, and with further reference to FIG. 8, FIG. 8 is a partially enlarged view at B of a thermal management component 31 shown in FIG. 7. The bent wall 312 includes a first segment 3121 and two second segments 3122. A second segment 3122, a first segment 3121, and the other second segment 3122 are sequentially connected, and the two second segments 3122 are respectively connected to the two straight walls 311. The second segment 3122 is arranged obliquely relative to the straight wall 311 connected to it, and along the first direction X, the first segment 3121 is positioned between the two straight walls 311.

A second segment 3122, a first segment 3121, and another second segment 3122 are connected in sequence, with the two second segments 3122 connected to the two straight walls 311, respectively. In other words, the first segment 3121 is connected at each end in the first direction X to a straight wall 311 through a second segment 3122.

The second segment 3122 is arranged obliquely relative to the straight wall 311 connected to it, and along the first direction X, the first segment 3121 is positioned between the two straight walls 311. In other words, the second segment 3122 is an inclined structure arranged at an obtuse angle with respect to the straight wall 311, and the second segment 3122 inclines in the first direction X toward the other second segment 3122, thus allowing the first segment 3121 to be located between the two straight walls 311 in the first direction X.

The bent wall 312 is provided with second segments 3122 that are respectively connected to the two straight walls 311 and a first segment 3121 connected between the two second segments 3122. The second segments 3122 bend in the first direction X toward the other second segment 3122, such that the distance between the two second segments 3122 gradually decreases in the second direction Y toward the first segment 3121, thus allowing the bent wall 312 to form a contracted structure. Thus, when compressing the thermal management component 31 to absorb manufacturing tolerances, the second segment 3122 can deform relative to the first segment 3121, to facilitate the compression of the thermal management component 31 to absorb manufacturing tolerances.

According to some embodiments of the present disclosure, with reference to FIG. 7 and FIG. 8, a wall thickness of the straight wall 311 is L₁, and a wall thickness of the first segment 3121 is L₂, satisfying a condition: L₂ > L₁.

The condition, L₂ > L₁, means that the minimum wall thickness of the first segment 3121 is greater than the wall thickness of the straight wall 311,
where the wall thickness L₁ of the straight wall 311 is the thickness size along the first direction X.

If the first segment 3121 is a plate-like structure extending along the first direction X, then the wall thickness L₂ of the first segment 3121 is the thickness size of the first segment 3121 along the second direction Y. If the first segment 3121 is a curved, arc-shaped structure, then the wall thickness L₂ of the first segment 3121 is the thickness size of the first segment 3121 in the direction of its radius of curvature, which means the wall thickness L₂ of the first segment 3121 is the thickness size of the first segment 3121 in a direction normal to a tangent line facing the surface of the holding space 313.

By setting the wall thickness of the first segment 3121 of the bent wall 312 to be greater than the wall thickness of the straight wall 311, the structural strength and the deformation resistance of the first segment 3121 of the bent wall 312 are increased. This effectively alleviates the occurrence of deformation or excessive curvature change of the first segment 3121 of the bent wall 312 when compressing the thermal management component 31 to absorb manufacturing tolerances, which is conducive to maintaining the original structural shape of the first segment 3121 of the bent wall 312. Consequently, it can reduce the occurrence of excessive compression or crushing of the thermal management component 31, thereby lowering the risk of the bent wall 312 being damaged or cracked during the compression process of the thermal management component 31.

According to some embodiments of the present disclosure, with reference to FIG. 7 and FIG. 8, along the second direction Y, the first segment 3121 is an arc-shaped structure bending in a direction away from the holding space 313.

That is to say, the first segment 3121 is an arc-shaped structure, and the first segment 3121 bends in the second direction Y away from the holding space 313.

By arranging the first segment 3121 as an outwardly bending arc-shaped structure, one the one hand, it facilitates the connection between the first segment 3121 and the second segment 3122, thus reducing the difficulty of manufacturing; on the other hand, it enables a smooth arc transition between the first segment 3121 and the second segment 3122, which alleviates the phenomenon of excessively small curvature radius at the connection between the first segment 3121 and the second segment 3122. This effectively reduces the risk of the connection between the first segment 3121 and the second segment 3122 being damaged or cracked during the compression process of the thermal management component 31.

According to some embodiments of the present disclosure, with reference to FIG. 8, the wall thickness of the second segment 3122 gradually increases from the end connected to the straight wall 311 toward the end connected to the first segment 3121.

A wall thickness of the end of the second segment 3122 connected to the straight wall 311 is the same as a wall thickness of the straight wall 311.

By setting the wall thickness of the second segment 3122 to gradually increase from the end connected to the straight wall 311 to the end connected to the first segment 3121, it facilitates manufacturing the first segment 3121 as a structure of which a wall thickness is greater than the wall thickness of the straight wall 311, thus reducing manufacturing difficulty.

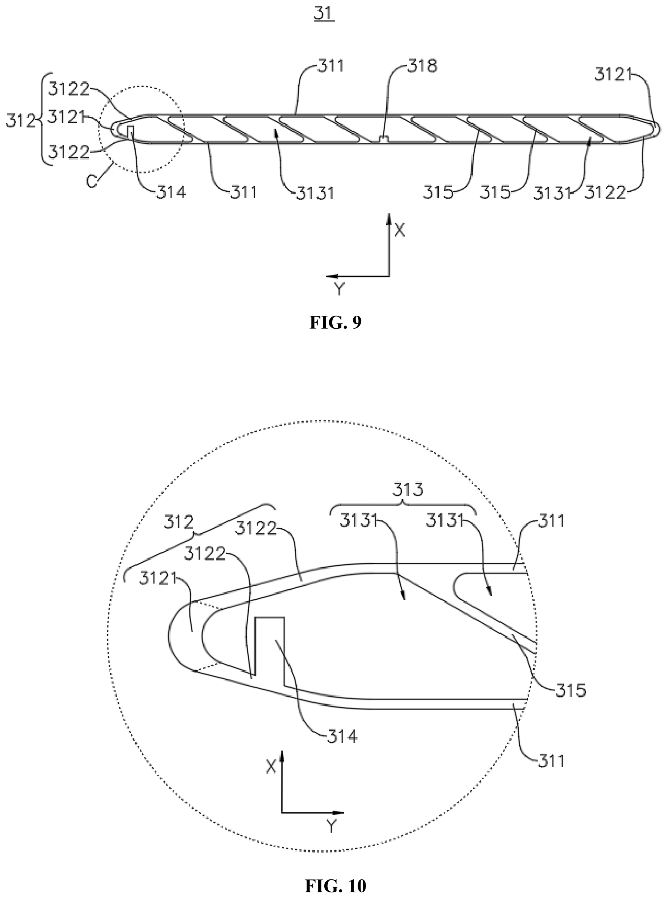

According to some embodiments of the present disclosure, referring to FIG. 9 and FIG. 10, FIG. 9 is a front view of a thermal management component 31 in a third direction Z provided in some embodiments of the present disclosure, and FIG. 10 is a partially enlarged view at C of a thermal management component 31 shown in FIG. 9. The thermal management component 31 further can include a reinforcement portion 314, and the reinforcement portion 314 is arranged between the two second segments 3122 along the first direction X.

The reinforcement portion 314 is arranged between the two second segments 3122, meaning that, along the first direction X, a reinforcement portion 314 is connected between the two second segments 3122, thus allowing the reinforcement portion 314 to provide support to the two second segments 3122.

Optionally, there are multiple ways to connect the reinforcement portion 314. For example, the reinforcement portion 314 can be connected to one of the two second segments 3122, connected to both second segments 3122, or connected to the first segment 3121.

It should be noted that in the embodiments where the reinforcement portion 314 is provided between the two second segments 3122, the wall thickness of the first segment 3121 can be set to be greater than the wall thickness of the straight wall 311; or, the wall thickness of the first segment 3121 can be set to be equal to the wall thickness of the straight wall 311. Exemplarily, in FIG. 10, the wall thickness of the first segment 3121 is greater than the wall thickness of the straight wall 311, and a reinforcement portion 314 is arranged between the two second segments 3122.

By arranging a reinforcement portion 314 between the two second segments 3122 along the first direction X, the reinforcement portion 314 can provide certain support for the two second segments 3122, thereby increasing the deformation resistance of the first segment 3121 of the bent wall 312. This effectively alleviates the occurrence of deformation or excessive curvature change of the first segment 3121 of the bent wall 312 when compressing the thermal management component 31 to absorb manufacturing tolerances, which is conducive to maintaining the original structural shape of the first segment 3121 of the bent wall 312. Consequently, it can reduce the occurrence of excessive compression or crushing of the thermal management component 31, thereby lowering the risk of the bent wall 312 being damaged or cracked during the compression process of the thermal management component 31.

In some embodiments, referring to FIGS. 9 and 10, along the first direction X, one end of the reinforcement portion 314 is connected to one of the two second segments 3122, and the other end is arranged at intervals with the other of the two second segments 3122.

That is to say, the reinforcement portion 314 is connected only to one of the two second segments 3122 and has a gap with the other second segment 3122 along the first direction X.

By arranging the reinforcement portion 314 to be connected to one second segment 3122 and spaced from the other second segment 3122, the reinforcement portion 314 can provide support to the two second segments 3122 and reserve compression allowance at the same time, thereby facilitating the compression of the thermal management component 31 to absorb manufacturing tolerances.

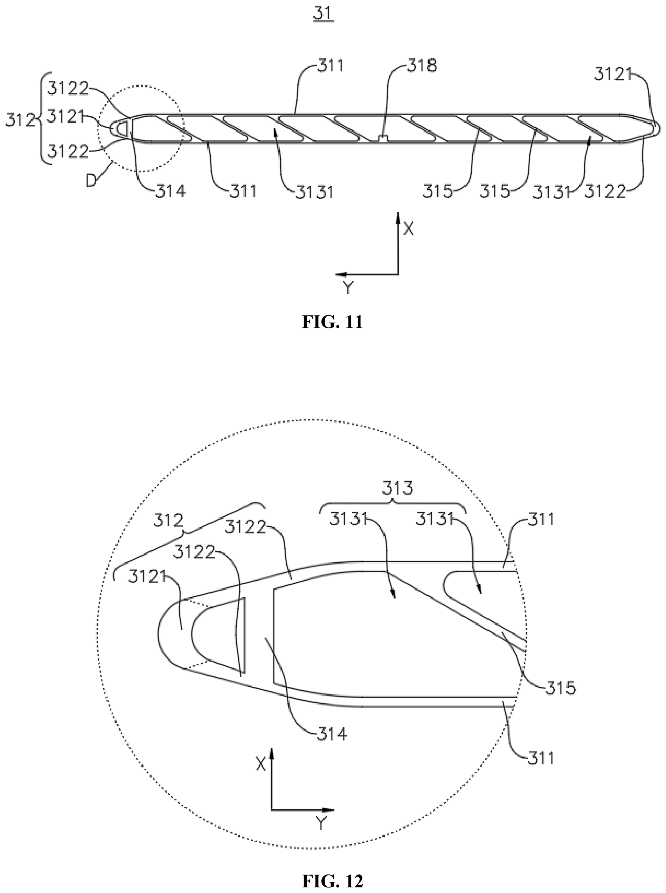

In some embodiments, referring to FIGS. 11 and 12, FIG. 11 is a front view of a thermal management component 31 in a third direction Z provided in some embodiments of the present disclosure, and FIG. 12 is a partially enlarged view at D of a thermal management component 31 shown in FIG. 11. Along the first direction X, each end of the reinforcement portion 314 is connected to one of the two second segments 3122. In other words, the reinforcement portion 314 is connected to both second segments 3122.

By connecting each end of the reinforcement portion 314 with each of the two second segments 3122, this structure effectively enhances the connection strength between the reinforcement portion 314 and the bent wall 312, which is beneficial for improving the supporting effect of the reinforcement portion 314 on the two second segments 3122.

According to some embodiments of the present disclosure, with reference to FIG. 10 and FIG. 12, along the second direction Y, the reinforcement portion 314 is arranged at intervals with the first segment 3121. In other words, a gap is provided between the reinforcement portion 314 and the first segment 3121 in the second direction Y.

By arranging the reinforcement portion 314 at intervals with the first segment 3121 along the second direction Y, a gap is provided between the reinforcement portion 314 and the first segment 3121 in the second direction Y, which helps to reduce the manufacturing difficulty of the thermal management component 31.

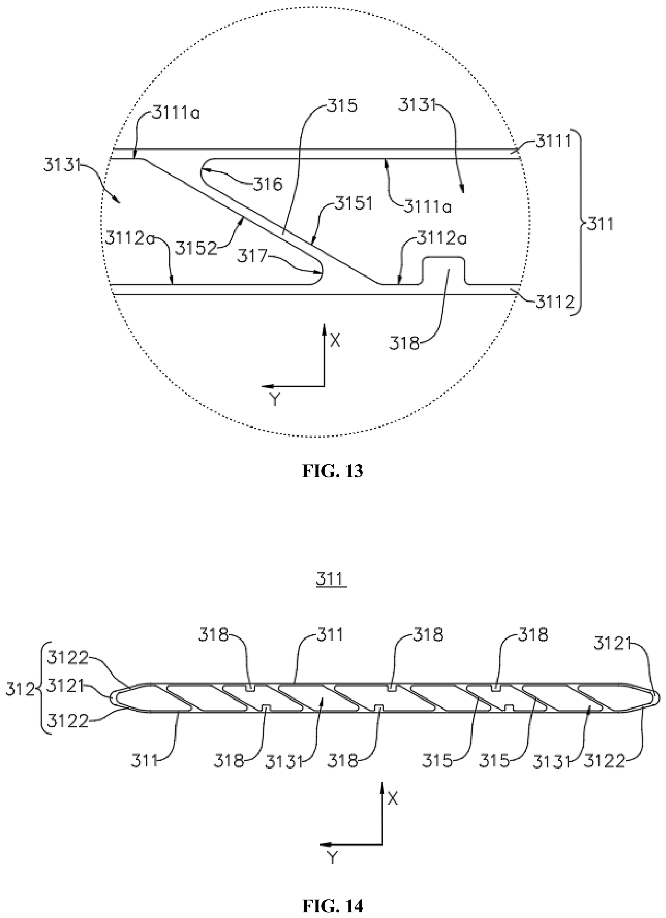

According to some embodiments of the present disclosure, with reference to FIGS. 6 and 7, and with further reference to FIG. 13, FIG. 13 is a partially enlarged view at E of a thermal management component 31 shown in FIG. 7. In some embodiments, the thermal management component 31 can further include multiple partition portions 315. The multiple partition portions 315 are arranged at intervals along the second direction Y. The partition portion 315 is arranged obliquely between the two straight walls 311 and connected to the two straight walls 311. The multiple partition portions 315 are configured to divide the holding space 313 into multiple medium flow channels 3131, and the medium flow channels 3131 are configured for containing heat exchange medium.

The partition portion 315 is arranged obliquely between the two straight walls 311 and is connected to both straight walls 311, meaning that the partition portion 315 forms an angle with the straight walls 311. The two ends of the partition portion 315 in the first direction X are respectively connected to the two straight walls 311. The partition portion 315 extends along the third direction Z, thus dividing the holding space 313 into multiple medium flow channels 3131 that extend along the third direction Z, and the multiple medium flow channels 3131 are arranged along the second direction Y.

By arranging multiple partition portions 315 at intervals along the second direction Y within the holding space 313 of the thermal management component 31, the holding space 313 is divided into multiple medium flow channels 3131 configured for the flow of heat exchange medium. This facilitates the control of the flow rate and flow volume of the heat exchange medium within the thermal management component 31. Additionally, by arranging the partition portion 315 in an inclined manner and connecting it between the two straight walls 311, the partition portion 315 can deform more easily when the thermal management component 31 is compressed along the first direction X to absorb manufacturing tolerances, which helps to reduce the difficulty of compressing the thermal management component 31.

According to some embodiments of the present disclosure, with reference to FIG. 13, the partition portion 315 is provided with an opposing first surface 3151 and second surface 3152 along its thickness direction. The two straight walls 311 include a first straight wall 3111 and a second straight wall 3112, wherein the first straight wall 3111 is provided with a third surface 3111a facing the medium flow channel 3131, and the second straight wall 3112 is provided with a fourth surface 3112a facing the medium flow channel 3131. The first surface 3151 is arranged at an acute angle with the third surface 3111a and at an obtuse angle with the fourth surface 3112a, and the second surface 3152 is arranged at an obtuse angle with the third surface 3111a and at an acute angle with the fourth surface 3112a, wherein the first surface 3151 is connected to the third surface 3111a through a first chamfered surface 316, and/or the second surface 3152 is connected to the fourth surface 3112a through a second chamfered surface 317.

The first straight wall 3111 is provided with a third surface 3111a facing the medium flow channel 3131, and the second straight wall 3112 is provided with a fourth surface 3112a facing the medium flow channel 3131. In other words, the surface of the first straight wall 3111 facing the second straight wall 3112 in the first direction X is the third surface 3111a, and the surface of the second straight wall 3112 facing the first straight wall 3111 in the first direction X is the fourth surface 3112a.

The first surface 3151 is arranged at an acute angle with the third surface 3111a and at an obtuse angle with the fourth surface 3112a, meaning that the first surface 3151, on one side of the partition portion 315 in its thickness direction, forms an acute angle with one straight wall 311 and an obtuse angle with the other. Similarly, the second surface 3152 is arranged at an obtuse angle with the third surface 3111a and at an acute angle with the fourth surface 3112a, meaning that the second surface 3152, on the other side of the partition portion 315 in its thickness direction, forms an obtuse angle with one straight wall 311 and an acute angle with the other.

The first surface 3151 is connected to the third surface 3111a via a first chamfered surface 316, meaning that a chamfer is formed between the first surface 3151 of the partition portion 315 on one side in its thickness direction and the third surface 3111a of the first straight wall 3111 set at an acute angle. Similarly, the second surface 3152 is connected to the fourth surface 3112a via a second chamfered surface 317, meaning that a chamfer is formed between the second surface 3152 of the partition portion 315 on one side in its thickness direction and the fourth surface 3112a of the second straight wall 3112 set at an acute angle.

Exemplarily, both the first chamfered surface 316 and the second chamfered surface 317 are curved surfaces. Of course, in other embodiments, the first chamfered surface 316 and the second chamfered surface 317 can also be flat surfaces.

The two surfaces of the partition portion 315 that form acute angles with the straight wall 311 are connected through chamfered surfaces, which increases the thickness of the portion where the partition portion 315 connects with the straight wall 311 along the second direction Y. On the one hand, it enhances the stability and reliability of the connection between the partition portion 315 and the straight wall 311, and on the other hand, it also helps to alleviate the occurrence of cracks between the partition portion 315 and the straight wall 311.

According to some embodiments of the present disclosure, with reference to FIG. 7 and FIG. 13, along the first direction X, a support portion 318 is provided in a protruding manner on a side of the straight wall 311 facing the holding space 313, and a size of the support portion 318 is smaller than a distance between the two straight walls 311.

The size of the support portion 318 is smaller than the distance between the two straight walls 311, meaning that the support portion 318 protrudes from the surface of one straight wall 311 facing the other straight wall 311 and is arranged at intervals with the other straight wall 311 in the first direction X.

Optionally, one or multiple support portions 318 can be arranged on the straight wall 311. Exemplarily, in FIG. 7, one support portion 318 is arranged on the straight wall 311. If multiple support portions 318 are arranged on the straight wall 311, the multiple support portions 318 are arranged at intervals along the second direction Y.

By providing a support portion 318 on the side of the straight wall 311 facing the holding space 313, and with the size of the support portion 318 along the first direction X being smaller than the distance between the two straight walls 311, the thermal management component 31 with this structure allows the support portion 318 to provide some support to the two straight walls 311 when the thermal management component 31 is compressed to absorb manufacturing tolerances, thereby alleviating the phenomenon of excessive compression or crushing of the thermal management component 31. This is beneficial for maintaining the smooth flow of the heat exchange medium within the holding space 313.

According to some embodiments of the present disclosure, with reference to FIG. 14, FIG. 14 is a front view of a thermal management component 31 in a third direction Z provided in some embodiments of the present disclosure. Both straight walls 311 are provided with support portions 318, and along the first direction X, the projections of the support portions 318 on the two straight walls 311 do not overlap.

In the first direction X, the projections of the support portions 318 on the two straight walls 311 do not overlap, meaning that in the second direction Y, the support portions 318 arranged on the two straight walls 311 are positioned in a staggered manner.

It should be noted that in embodiments where the two straight walls 311 are provided with support portions 318, one or multiple support portions 318 can be arranged on the straight wall 311. Exemplarily, in FIG. 14, the two straight walls 311 are provided with multiple support portions 318, and the multiple support portions 318 on each straight wall 311 are arranged at intervals along the second direction Y.

By providing support portions 318 on both straight walls 311, where the projections of the support portions 318 on the two straight walls 311 along the first direction X do not overlap, the supporting effect of the support portions 318 on the two straight walls 311 is enhanced. This further reduces the risk of excessive compression or crushing of the thermal management component 31.

According to some embodiments of the present disclosure, with reference to FIG. 3, FIG. 4, and FIG. 5, The embodiments of the present disclosure also provide a thermal management assembly 30, wherein the thermal management assembly 30 includes a first current collector 32, a second current collector 33, and a thermal management component 31 as described above. Along the third direction Z, the first current collector 32 and the second current collector 33 are respectively connected to both ends of the thermal management component 31. The first direction Y, the second direction Z, and the third direction Z are mutually perpendicular. The first current collector 32 and the second current collector 33 are each arranged with a medium inlet 321 and a medium outlet 331, respectively, and both the medium inlet 321 and the medium outlet 331 communicate with the holding space 313.

The first direction X is the thickness direction of the thermal management component 31, the second direction Y is the width direction of the thermal management component 31, and the third direction Z is the length direction of the thermal management component 31.

In the embodiment where a partition portion 315 is arranged within the holding space 313 of the thermal management component 31, the medium inlet 321 of the first current collector 32 and the medium outlet 331 of the second current collector 33 communicate with both ends of multiple medium flow channels 3131 in the third direction Z, thus enabling the function of collecting currents. This facilitates the simultaneous injection of the heat exchange medium into multiple medium flow channels 3131, or it allows the heat exchange medium to flow out of multiple medium flow channels 3131 simultaneously.

The thermal management assembly 30 is further provided with a first current collector 32 and a second current collector 33, which are connected to both ends of the thermal management component 31 along the third direction Z. The first current collector 32 and the second current collector 33 are respectively provided with a medium inlet 321 and a medium outlet 331. Therefore, by communicating the two ends of the holding space 313 respectively with the medium inlet 321 and the medium outlet 331, the heat exchange medium can flow into or out of the holding space 313, thereby enabling the thermal management function of the thermal management assembly 30.

According to some embodiments of the present disclosure, with reference to FIG. 2 and FIG. 3, The present disclosure also provides a battery 100, wherein the battery 100 includes a box 10, a battery cell 20, and any of the thermal management assemblies 30 in the above solutions. The battery cell 20 is accommodated within the box 10, and the thermal management assembly 30 is arranged within the box 10, wherein the thermal management assembly 30 is configured to regulate the temperature of the battery cell 20.

Exemplarily, in FIG. 3, the battery cell 20 has a rectangular shape. Multiple battery cells 20 are arranged in a layout, wherein the battery 100 includes multiple rows of battery cells 20, and the multiple rows of battery cells 20 are arranged along a first direction X, with each row of battery cells 20 including multiple battery cells 20 arranged along a third direction Z.

According to some embodiments of the present disclosure, with reference to FIG. 3, the battery cell 20 is provided with a first side surface 21, wherein the first side surface 21 is a surface with the largest area among the outer surfaces of the battery cell 20, and the first side surface 21 abuts the straight wall 311.

The first side surface 21 abuts the straight wall 311 of the thermal management component 31, which can be a direct abutment between the first side surface 21 and the straight wall 311 of the thermal management component 31, meaning that the face with the largest area of the outer surfaces of the battery cell 20 is directly abutted to the straight wall 311 of the thermal management component 31. Of course, in some embodiments, it can also be that the first side surface 21 indirectly abuts the straight wall 311 of the thermal management component 31, meaning that the face with the largest area of the outer surfaces of the battery cell 20 is abutted to the straight wall 311 of the thermal management component 31 through a thermal conductive member, such as thermal adhesive or thermal pad.

It should be noted that the battery cell 20 is of a rectangular structure, and the first side surface 21 is the surface of the battery cell 20 with the largest area among the outer surfaces, meaning that the first side surface 21 is the outer surface of the battery cell 20 in the thickness direction of the battery cell 20. In other words, the thermal management assembly 30 is arranged between two adjacent rows of battery cells 20 along the thickness direction of the battery cell 20, and the straight wall 311 of the thermal management component 31 of the thermal management assembly 30 abuts the first side surface 21 of the battery cell 20 to achieve thermal exchange between the battery cell 20 and the thermal management component 31.

The first direction X is consistent with the thickness direction of the battery cell 20, the second direction Y is consistent with the width direction of the battery cell 20, and the third direction Z is consistent with the length direction of the battery cell 20.

By arranging the straight wall 311 of the thermal management component 31 to abut the first side surface 21 of the battery cell 20, that is, by arranging the thermal management component 31 on the side of the battery cell 20 with the largest surface area, sufficient heat exchange area between the battery cell 20 and the thermal management component 31 can be ensured. This is beneficial for enhancing the thermal management capability of the thermal management component 31 for the battery cell 20, thereby effectively reducing the safety risks caused by temperature rise during the use of the battery 100.

According to some embodiments of the present disclosure, the embodiments of the present disclosure provide an electric device, wherein the electric device includes a battery 100 of any of the above solutions, and the battery 100 is configured to provide electrical energy to the electric device.

The electric device can be any of the above-mentioned devices or systems that apply the battery 100.

According to some embodiments of the present disclosure, with reference to FIGS. 4 to 8, and FIG. 13, The present disclosure provides a thermal management component 31, wherein the thermal management component 31 includes two straight walls 311, two bent walls 312, and multiple partition portions 315 and support portions 318. The two straight walls 311 are arranged oppositely along a first direction X. Along the second direction Y, each of the two bent walls 312 is connected to one end of the straight walls 311, and the bent wall 312 bends in a direction away from the holding space 313, wherein the second direction Y is perpendicular to the first direction X. The two bent walls 312 and the two straight walls 311 enclose to form a holding space 313, and the holding space 313 is configured for containing a heat exchange medium. The bent wall 312 includes a first segment 3121 and two second segments 3122. A second segment 3122, a first segment 3121, and the other second segment 3122 are sequentially connected. The first segment 3121 is an arc-shaped structure that bends in the second direction Y away from the holding space 313. The two second segments 3122 are respectively connected to the two straight walls 311. The second segment 3122 is arranged obliquely relative to the straight wall 311 connected to it, and along the first direction X, the first segment 3121 is positioned between the two straight walls 311. The wall thickness of the straight wall 311 is greater than the wall thickness of the first segment 3121, and the wall thickness of the second segment 3122 gradually increases from the end connected to the straight wall 311 toward the end connected to the first segment 3121. The multiple partition portions 315 are arranged at intervals along the second direction Y. The partition portion 315 is arranged obliquely between the two straight walls 311 and connected to the two straight walls 311. The multiple partition portions 315 are configured to divide the holding space 313 into multiple medium flow channels 3131, and the medium flow channels 3131 are configured for containing heat exchange medium. The two surfaces of the partition portion 315 that form acute angles with the straight wall 311 are connected through chamfered surfaces. Along the first direction X, a support portion 318 is provided in a protruding manner on a side of the straight wall 311 facing the holding space 313, and a size of the support portion 318 is smaller than a distance between the two straight walls 311.

It should be noted that, without conflicting, the embodiments and features described in the embodiments of the present disclosure can be combined with each other.

The above are only preferred embodiments of the present disclosure, which is not intended to limit the present disclosure, and the present disclosure can have various changes and variations for those skilled in the art. Any modification, equivalent substitution, improvement, etc. made within the spirit and principles of the present disclosure shall be included in the scope of protection of the present disclosure.

## Claims

1. A thermal management component, comprising:
two straight walls, arranged oppositely along a first direction; and
two bent walls, each connected to one end of the straight walls along a second direction, wherein the second direction is perpendicular to the first direction, the two bent walls and the two straight walls enclose to form a holding space, and the holding space is configured for containing a heat exchange medium.

2. The thermal management component according to claim 1, wherein along the second direction , the bent wall bends in a direction away from the holding space.

3. The thermal management component according to claim 2, wherein the bent wall comprises a first segment and two second segments; a second segment, the first segment, and the other second segment are sequentially connected; and the two second segments are respectively connected to the two straight walls; and
the second segment is arranged obliquely relative to the straight wall connected to it; and along the first direction, the first segment is positioned between the two straight walls.

4. The thermal management component according to claim 3, wherein a wall thickness of the straight wall is L₁, and a wall thickness of the first segment is L₂, satisfying: L₂>L₁.

5. The thermal management component according to claim 4, wherein along the second direction, the first segment is an arc-shaped structure bending in a direction away from the holding space .

6. The thermal management component according to claim 4 or 5, wherein a wall thickness of the second segment gradually increases from an end connected to the straight wall toward an end connected to the first segment.

7. The thermal management component according to any one of claims 3 to 6, wherein the thermal management component further comprises a reinforcement portion, and the reinforcement portion is arranged between the two second segments along the first direction.

8. The thermal management component according to claim 7, wherein along the first direction, an end of the reinforcement portion is connected to one of the two second segments, and another end is arranged at intervals with the other of the two second segments.

9. The thermal management component according to claim 7, wherein along the first direction, each end of the reinforcement portion is connected to one of the two second segments.

10. The thermal management component according to any one of claims 7 to 9, wherein along the second direction, the reinforcement portion is arranged at intervals with the first segment.

11. The thermal management component according to any one of claims 1 to 10, wherein the thermal management component further comprises multiple partition portions, arranged at intervals along the second direction; the partition portions are arranged obliquely between the two straight walls and connected to the two straight walls; the multiple partition portions are configured to divide the holding space into multiple medium flow channels; and the medium flow channels are configured for containing heat exchange medium.

12. The thermal management component according to claim 11, wherein the partition portion is provided with an opposing first surface and second surface along its thickness direction; and the two straight walls comprise a first straight wall and a second straight wall, wherein the first straight wall is provided with a third surface facing the medium flow channel, and the second straight wall is provided with a fourth surface facing the medium flow channel;
the first surface is arranged at an acute angle with the third surface and at an obtuse angle with the fourth surface, and the second surface is arranged at an obtuse angle with the third surface and at an acute angle with the fourth surface; and
the first surface is connected to the third surface through a first chamfered surface, and/or the second surface is connected to the fourth surface through a second chamfered surface.

13. The thermal management component according to any one of claims 1 to 12, wherein along the first direction, a support portion is provided in a protruding manner on a side of the straight wall facing the holding space, and a size of the support portion is smaller than a distance between the two straight walls.

14. The thermal management component according to claim 13, wherein the two straight walls are each provided with a support portion, and along the first direction, projections of the support portions on the two straight walls do not overlap.

15. A thermal management assembly, comprising:
the thermal management component according to any one of claims 1 to 14; and
a first current collector and a second current collector, wherein along a third direction, the first current collector and the second current collector are respectively connected to the two ends of the thermal management component, and the first direction, the second direction, and the third direction are perpendicular to each other; and
the first current collector and the second current collector are respectively provided with a medium inlet and a medium outlet, wherein the medium inlet and the medium outlet are in communication with the holding space.

16. A battery, comprising:
a box;
a battery cell accommodated within the box; and
the thermal management assembly according to claim 15, wherein the thermal management assembly is arranged in the box, and the thermal management assembly is configured to manage a temperature of the battery cell.

17. The battery according to claim 16, wherein the battery cell is provided with a first side surface, the first side surface is a surface with a largest area among outer surfaces of the battery cell, and the first side surface abuts the straight wall.

18. An electric device, comprising the battery according to claim 16 or 17, wherein the battery is configured to provide electrical energy.
